# EUROPÄISCHE PATENTSCHRIFT

(11) **EP 1 281 899 B1**
(45) Veröffentlichungstag und Bekanntmachung des Hinweises auf die Patenterteilung: **02.08.2006**
(21) Anmeldenummer: 02014492.9
(22) Anmeldetag: 29.06.2002
(51) Int. Cl.: F16K 11/074

(54) **Umstellvorrichtung für eine Sanitäreinrichtung mit mindestens zwei Wasserverbrauchern**
Change-over device for a sanitary device with at least two users
Dispositif de changement de régime pour dispositif sanitaire avec au moins deux utilisateurs

(30) Priorität: 01.08.2001 DE 10137611
(43) Veröffentlichungstag der Anmeldung: 05.02.2003
(73) Patentinhaber: HANSA METALLWERKE AG, 70567 Stuttgart (DE)
(72) Erfinder: Assenmacher, Bernd, 70597 Stuttgart (DE)
(74) Vertreter: Ostertag, Ulrich

(56) Entgegenhaltungen:
- EP-A- 0 795 703
- WO-A-00/68754
- WO-A-01/53732
- GB-A- 1 458 001
- US-A- 5 190 077
- US-A- 5 546 983
- US-A- 5 775 373

## Beschreibung

Eine Umstellvorrichtung für eine Sanitäreinrichtung mit mindestens zwei Wasserverbrauchern, insbesondere für eine Duscheinrichtung mit mindestens zwei Duschköpfen, mit
a) einem Gehäuse, das einen Einlaß und mindestens zwei Auslässe aufweist;
b) einer Umstellventileinrichtung, welche den Einlaß des Gehäuses wahlweise mit einem der Auslässe des Gehäuses verbindet und hierzu einen Ventilkörper besitzt, der von einer in eine andere Stellung bewegbar ist und
c) zusätzlich einer Absperrventileinrichtung, mit welcher der Wasserdurchfluß durch die Umstellventileinrichtung unterbrochen werden kann, ohne die Stellung des Ventilkörpers der Umstellventileinrichtung zu verändern.

Mit zunehmenden Ansprüchen an den Komfort von Brauseeinrichtungen wächst die Zahl von Brauseköpfen unterschiedlicher Art, die sich in einer Brausekabine finden. So werden zunehmend neben der herkömmlichen Kopfbrause und einer Handbrause auch Seitenbrausen vorgesehen, über welche sich der Benutzer von der Seite her besprühen lassen kann. Zur Wahl der Brauseart, die gerade gewünscht wird, werden Umstellvorrichtungen der eingangs genannten Art eingesetzt, die vom Markt her in unterschiedlichsten Ausführungsformen bekannt sind. Wünscht der Benutzer den Wasserstrom zu den Brauseköpfen zu unterbrechen, beispielsweise um sich einzuseifen, muß er bisher das Mengenventil betätigen, welches der Umstellvorrichtung vorgeschaltet ist. Dabei geht die zuvor gewählte Einstellung am Mengenventil, das im allgemeinen auch ein die Temperatur des fließenden Wassers bestimmendes Mischventils ist, verloren und muß nach der Unterbrechung neu gefunden werden.

Eine Umstellvorrichtung der eingangs genannten Art geht aus der WO 01/53 732 A1 hervor. Dort ist bei einer ersten Ausführungsform einer Umstellventileinrichtung ein Absperrventil vorgelagert, bei einer zweiten Ausführungsform in den Betätigungskopf einer Umstellventileinrichtung seitlich ein Betätigungshebel integriert, mit dessen Hilfe eine Absperrventileinrichtung betätigt werden kann. Vor einer Umstellung auf einen anderen Wasserverbraucher muß bei beiden Ausführungen die Absperrventileinrichtung auf "Stop" gestellt werden, worauf der gewünschte Wasserverbraucher durch Drehung des Betätigungsknopfes ausgewählt und anschließend die Absperrventileinrichtung wieder auf "Durchfluß" gestellt wird. Dies ist mit einem unerwünschten Aufwand verbunden, kostet Zeit und beeinträchtigt dadurch den Komfort des Benutzers.

Aufgabe der vorliegenden Erfindung ist es, eine Umstellvorrichtung der eingangs genannten Art so auszugestalten, daß einerseits kürzere oder längere Unterbrechungen des Wasserstroms möglich sind, ohne daß die zuvor gewählte Stellung des vorgeschalteten Mengen- und/oder Mischventils sowie der Umstellventileinrichtung verlorengeht, und andererseits auch eine Änderung der Stellung der Umstellventileinrichtung möglich ist, ohne den Wasserfluß zu unterbrechen. Um den Komfort des Benutzers nicht zu stören, soll auch die Zahl der Bedienelemente nicht erhöht werden.

Diese Aufgabe wird erfindungsgemäß dadurch gelöst, daß
d) die Stellung des Ventilkörpers der Umstellventileinrichtung unabhängig von der Stellung der Absperrventileinrichtung verändert werden kann.

Erfindungsgemäß ist also vorgesehen, daß die Stellung des Ventilkörpers der Umstellventileinrichtung und die Stellung der Absperrventileinrichtung jeweils unabhängig voneinander verändert werden können. Dadurch gewinnt der Benutzer die größtmögliche Freiheit: Einerseits in der Wahl des verwendeten Wasserverbrauchers, also beispielsweise eines bestimmten Brausekopfes, welche ohne Unterbrechung des Wasserstromes erfolgen kann, und andererseits in der Entscheidung, den Wasserstrom mit Hilfe der Absperrventileinrichtung gelegentlich abzustellen, zum Beispiel um sich einzuseifen, und sodann den vorherigen Wasserstrom durch erneute Betätigung der Absperrventileinrichtung wieder herzustellen. Immer vorhanden ist ein der Umstellvorrichtung vorgelagertes Mengen- und/oder Mischventil, mit dessen Hilfe der Benutzer die Wassermenge und/oder -temperatur natürlich ebenfalls unabhängig einstellen kann. Jedoch ist die Funktion der Unterbrechung des Wasserflusses - anders als einleitend erwähnt - vom Mengenventil weggenommen und in die Umstellvorrichtung integriert.

Dabei ist es an und für sich aus der US-PS 5 546 983 bekannt, in eine normale Mischarmatur, die einer Brauseeinrichtung vorgeschaltet ist, zwei schnell betätigbare Vorabsperrventile zu einzubauen. Diese haben aber dort den Sinn, den Wasserzustrom in das Gehäuse der Mischarmatur zu unterbrechen, wenn die in diesem Gehäuse befindliche Kartusche zu Reparaturzwecken ausgetauscht werden soll.

Besonders bevorzugt wird diejenige Ausführungsform der Erfindung, bei welcher
a) der Ventilkörper der Umstellventileinrichtung eine Steuerscheibe ist, die wenigstens eine Wasserdurchtrittsöffnung aufweist und verdrehbar gegen eine feststehende Grundscheibe anliegt, die mindestens zwei Wasserdurchtrittsöffnungen aufweist, die mit den Auslässen des Gehäuses kommunizieren;
b) die Absperrventileinrichtung eine Stopscheibe umfaßt, die an der Steuerscheibe anliegt, sich mit dieser mitverdreht, aber zusätzlich eine Relativbewegung gegenüber der Steuerscheibe ausführen kann und mindestens eine Wasserdurchtrittsöffnung aufweist, die in Überlappung mit der Durchtrittsöffnung der Steuerscheibe gebracht werden kann.

Umstellvorrichtungen, die mit Steuerscheiben, zumeist aus Keramik, arbeiten, sind an und für sich bekannt und wegen der Kompaktheit, leichten Bedienbarkeit und Wartungsfreundlichkeit sehr beliebt. Derartige Umstellvorrichtungen lassen sich durch die Integration einer Stopscheibe leicht für die erfindungsgemäßen Zwecke erweitern, wobei die zusätzliche Scheibe nur einen geringen Raumbedarf hat.

Ein in diesem Zusammenhang bevorzugtes Ausführungsbeispiel der Erfindung zeichnet sich dadurch aus, daß
a) die Steuerscheibe auf der der Stopscheibe zugewandten Seite zwei Wasserdurchtrittsöffnungen aufweist, die in eine auf der gegenüberliegenden Seite eingebrachte Vertiefung münden, wobei der die beiden Wasserdurchtrittsöffnungen in Umfangsrichtung trennende Steg eine Winkelerstreckung hat, die etwas größer als die Winkelerstreckung der Wasserdurchtrittsöffnungen ist;
b) die Stopscheibe mindestens zwei Wasserdurchtrittsöffnungen aufweist, deren Form und Winkelabstand der Form und dem Winkelabstand der Wasserdurchtrittsöffnungen der Steuerscheibe entspricht.

Bei dieser Ausführungsform ist es möglich, trotz verhältnismäßig hohem Gesamt-Strömungsquerschnitts, der zu geringen Drosselungen führt, mit einer geringen Winkelverdrehung der Steuerscheibe zwischen der Offen- und der Schließstellung auszukommen. Das Abstellen des Wasserstroms zu den Wasserverbrauchern benötigt also nur sehr kleine Verstellwege und kann dadurch sehr rasch erfolgen.

Eine Weiterführung dieses Grundgedankens stellt eine Ausführungsform der Erfindung dar, bei welcher
a) die Stopscheibe eine Vielzahl von Wasserdurchtrittsöffnungen aufweist, die in regelmäßigen Winkelabständen angeordnet sind, wobei die Zahl der Wasserdurchtrittsöffnungen der Stopscheibe größer als die Zahl der Wasserdurchtrittsöffnungen der Steuerscheibe ist;
b) ein Betätigungsmechanismus vorgesehen ist, der bei jeder Betätigung die Stopscheibe um den selben Winkel stets in der selben Richtung verdreht.

Bei dieser Ausführungsform der Erfindung führt also die Steuerscheibe zwischen der Offen- und der Schließstellung der Absperrventileinrichtung keine hin- und bergehende Bewegung sondern eine Drehbewegung in immer der selben Richtung aus. Dabei wandern die unterschiedlichen Wasserdurchtrittsöffnungen der Stopscheibe zyklisch an den Wasserdurchtrittsöffnungen der Steuerscheibe vorbei. Auf diese Weise können Betätigungsmechanismen eingesetzt werden, die vom Benutzer immer in der selben Weise zu betätigen sind, ohne daß er darauf achten muß, ob sich die Absperrventileinrichtung in der Offen- oder der Schließstellung befindet.

Ein hierfür geeigneter Betätigungsmechanismus umfaßt ein unter axialem Druck bewegliches Teil sowie einen Kulissenmechanismus, der die Bewegung des axial beweglichen Teils in eine Verdrehung der Stopscheibe umsetzt. Kulissenmechanismen dieser Art sind in anderen Gebieten der Technik durchaus bekannt, so etwa bei Kugelschreibern. Auch die oben erwähnte US-PS 5 546 983 beschreibt einen derartigen Kulissenmechanismus.

Besonders vorteilhaft ist, wenn das axial bewegliche Teil eine Ventilspindel ist, die zusätzlich verdrehbar ist und mit der Steuerscheibe in Drehverbindung steht. Für den Benutzer dieser Umstellvorrichtung gibt es also nur ein einziges Betätigungselement, nämlich im allgemeinen einen Bediengriff, auf den er einen Druck ausüben muß, wenn der Schaltzustand der Absperrventileinrichtung verändert werden soll, und den er verdrehen muß, wenn ein Wechsel des angeschlossenen Wasserverbrauchers stattfinden soll.

Besonders platzsparend dabei ist diejenige Ausgestaltung der Erfindung, bei welcher im Kraftfluß zwischen der Ventilspindel und der Steuerscheibe eine Hohlwelle liegt, durch die sich eine Steckwelle hindurch erstreckt, welche die Stopscheibe mit dem Kulissenmechanismus verbindet.

Ein Ausführungsbeispiel der Erfindung wird nachfolgend anhand der Zeichnung näher erläutert; es zeigen
- Figur 1: einen Axialschnitt durch eine Umstellvorrichtung;
- Figur 2: perspektivisch und teilweise aufgebrochen die Umstellvorrichtung von Figur 1;
- Figur 3: eine Explosionsansicht der wichtigsten Baukomponenten, die der Verdrehung der Stopscheibe der Umstellvorrichtung der Figuren 1 und 2 dienen;
- Figur 4: die Draufsicht auf die Grundscheibe der Umstellvorrichtung der Figuren 1 und 2;
- Figur 5: einen Schnitt gemäß Linie V-V von Figur 4;
- Figur 6: eine Draufsicht auf die Steuerscheibe der Umstellvorrichtung der Figuren 1 und 2;
- Figur 7: einen Schnitt gemäß Linie VII-VII von Figur 6;
- Figur 8: eine Draufsicht auf die Stopscheibe der Umstellvorrichtung der Figuren 1 und 2;
- Figur. 9: einen Schnitt gemäß Linie IX-IX von Figur 8.

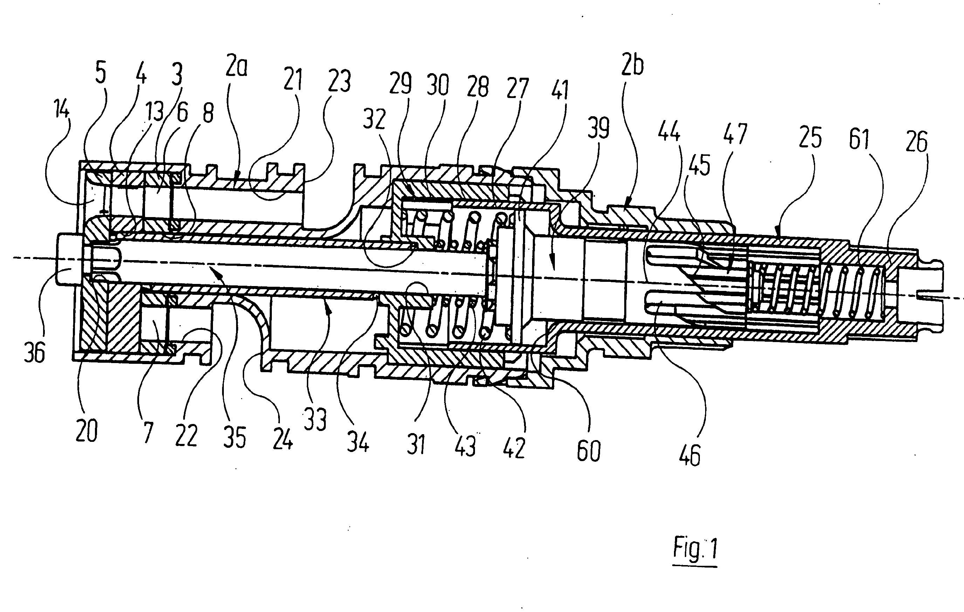

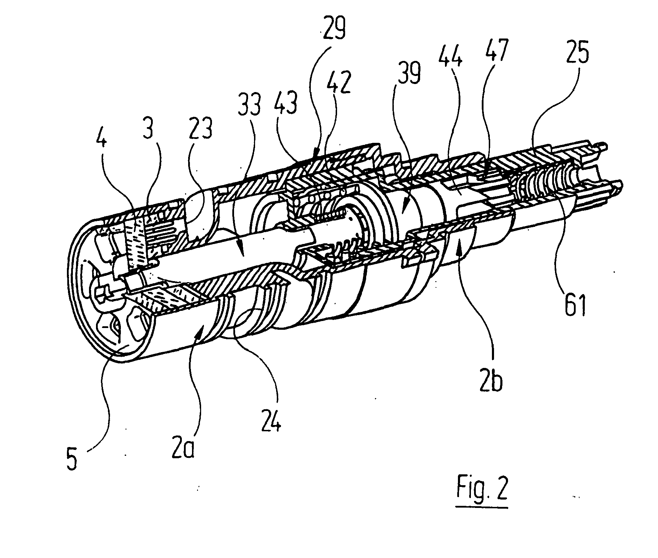

Die in den Figuren 1 und 2 dargestellte Umstellvorrichtung dient der Umstellung des von einem Mengen- und/oder Mischventil kommmenden Wasserstroms von einer Köpfbrause auf eine oder mehrere Seitenbrausen bzw. umgekehrt, sowie zum Unterbrechen dieses Wasserstroms. Sie umfaßt ein im wesentlichen rotationssymmetrisches Gehäuse 2, das aus zwei miteinander verrasteten Gehäuseteilen 2a, 2b zusammengesetzt ist. In dem in den Figuren 1 und 2 linken, offenen Endbereich des Gehäuseteils 2a sind, von innen nach außen, folgende aus Keramik gefertigte Scheiben untergebracht, die der Umstellung und dem Unterbrechen des Wasserstroms in noch zu beschreibender Weise dienen: Eine erste, feststehende Scheibe, die nachfolgend "Grundscheibe" genannt wird und das Bezugszeichen 3 trägt; eine zweite Steuerscheibe 4, die in bekannter Weise an der in den Figuren 1 und 2 linken Stirnfläche der Grundscheibe 3 dicht anliegt und gegenüber dieser mit Hilfe eines Mechanismus, der weiter unten beschrieben wird, verdrehbar ist. An der in den Figuren 1 und 2 linken Stirnfläche der Steuerscheibe 4 liegt als dritte Keramikscheibe eine Stopscheibe 5 an, die normalerweise gemeinsam mit der Steuerscheibe 4 verdreht wird, zusätzlich aber gegenüber der Steuerscheibe 4 mit Hilfe eines ebenfalls weiter unten erläuterten Mechanismus jeweils wiederholt um bestimmte Winkelbeträge verdreht werden kann.

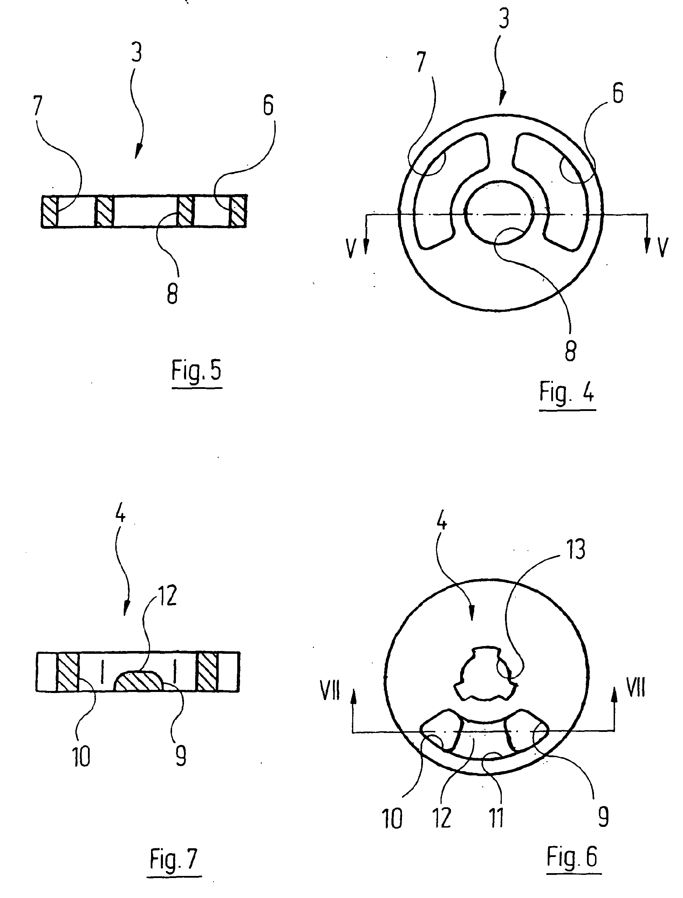

Die Grundscheibe 3 ist in den Figuren 4 und 5 herausgezeichnet. Sie umfaßt zwei kreisringsegmentförmige Wasserdurchtrittsöffnungen 6, 7 sowie eine mittlere kreisrunde Durchtrittsöffnung 8, deren Sinn weiter unten deutlich wird.

In den Figuren 6 und 7 ist die Steuerscheibe 4 gesondert herausgezeichnet. Sie umfaßt ebenfalls zwei Wasserdurchtrittsöffnungen 9, 10, die in eine kreisringsegmentförmige Vertiefung 11 einmünden, die von der der Grundscheibe 3 benachbarten Stirnseite her in die Steuerscheibe 4 eingebracht ist. Der die beiden Wasserdurchtrittsöffnungen 9, 10 voneinander trennende Steg 12 hat eine Winkelerstreckung, die etwas größer als die Winkelerstreckung der Wasserdurchtrittsöffnung 9, 10. Der Grund hierfür wird weiter unten deutlich werden.

Eine mittlere Durchtrittsöffnung 13 der Steuerscheibe 4 ist mit einem unrunden Querschnitt ausgestattet; sie dient in noch zu beschreibender Weise der Verdrehung der Steuerscheibe 4 gegenüber der Grundscheibe 3.

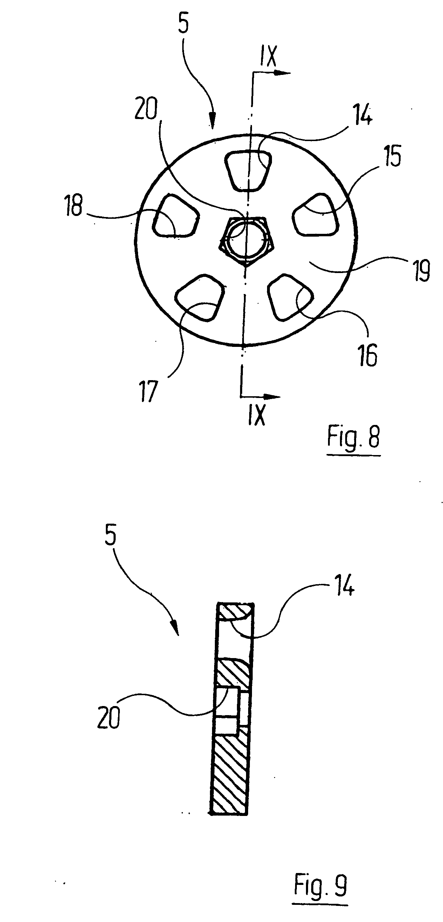

In den Figuren 8 und 9 schließlich ist die Stopscheibe 5 des Umstellventils der Figuren 1 und 2 gesondert herausgezeichnet. Diese Stopscheibe 5 umfaßt insgesamt fünf Wasserdurchtrittsöffnungen 14, 15, 16, 17, 18, deren Größe und Form den Wasserdurchtrittsöffnungen 9, 10 der Steuerscheibe 4 entspricht. Die zwischen jeweils zweien dieser Wasserdurchtrittsöffnungen 14, 15, 16, 17, 18 liegenden Stege 19 entsprechen in ihrer Winkelerstreckung dem Steg 12 der Steuerscheibe 4.

Auch die Stopscheibe 5 besitzt eine mittlere Durchtrittsöffnung 20, die mit einem unrunden, im vorliegenden Fall mit einem fünfeckigen Querschnitt versehen ist und der Verdrehung der Stopscheibe 5 gegenüber der Steuerscheibe 4 in noch zu beschreibender Weise dient.

Wie den Figuren 1 und 2 zu entnehmen ist, ist die Grundscheibe 3 an eine Stufe des Gehäuseteils 2a angelegt und durch einen geeigneten Formschluß mit dem Gehäuseteil 2a gegen Verdrehung gesichert. Das Gehäuseteil 2a enthält zwei Wasserkanäle 21, 22, die auf die Wasserdurchtritts öffnungen 6, 7 der Grundscheibe 3 ausgerichtet sind, die selbe Querschnittsform wie diese besitzen und parallel zur Achse des Gehäuses 2a, 2b zu zwei seitlichen Auslässen 23, 24 führen, die in Axialrichtung gegeneinander versetzt sind. Die Auslässe 23, 24 kommunizieren über ein Außengehäuse, welches in der Zeichnung nicht dargestellt ist und in welches die beschriebene Umstellvorrichtung eingesetzt wird, sowie über entsprechende Leitungen mit den Kopf- und Seitenbrausen einer Duschkabine.

Der Mechanismus, über welchen die Steuerscheibe 4 gegenüber der stationären Grundscheibe 3 verdreht werden kann, umfaßt eine Ventilspindel 25, welche das in den Figuren 1 und 2 rechte Gehäuseteil 2b koaxial durchsetzt, in diesem drehbar und axial verschiebbar geführt ist und auf dessen äußerem Kopf 26 ein nicht dargestellter Bediengriff in bekannter Weise befestigt werden kann. Die Ventilspindel 25 erweitert sich an ihrem innen liegenden Ende, etwa im Übergangsbereich zwischen den beiden Gehäuseteilen 2a, 2b, zu einer im Durchmesser vergrößerten Schürze 27, die auf ihrer Außenmantelfläche eine Außenverzahnung 28 aufweist. Die Außenverzahnung 28 kämmt mit einer Innenverzahnung 30 eines tassenförmigen Dreheinsatzes 29, der mit seiner offenen Seite in den Figuren 1 und 2 nach rechts zeigt.

Der "Boden" des tassenförmigen Dreheinsatzes 29 wird von einer zur Ventilachse koaxialen Stufenbohrung 31 durchsetzt. Der im Durchmesser größere Bereich der Stufenbohrung 31, der in den Figuren 1 und 2 nach links zeigt, trägt eine Innenverzahnung 32, welche mit einer Außenverzahnung 34 einer Hohlwelle 33 zusammenwirkt. Die Hohlwelle 33 verläuft koaxial zur Ventilachse durch eine Bohrung des Gehäuseteils 2a, durch die mittlere Durchtrittsöffnung 8 der Grundscheibe 3 und endet in der mittleren Durchtrittsöffnung 13 der Steuerscheibe 4. Ihr dortiges Ende ist komplementär zur Form der Durchtrittsöffnung 13 gestaltet, sodaß durch Verdrehen der Ventilspindel 25 aufgrund von Formschlüssen zwischen der Ventilspindel 25, dem Dreheinsatz 29, der Hohlwelle 33 und der Steuerscheibe 4 letztere gegenüber der Grundscheibe 3 verdreht werden kann. Dabei kann wahlweise die Vertiefung 11 der Steuerscheibe 4 in Überlappung mit einer der beiden Durchtrittsöffnungen 6, 7 der Grundscheibe 3 gebracht werden.

Die geschilderte Verdrehung der Ventilspindel 25 kann von einer Axialbewegung begleitet werden, da die ineinander greifenden Verzahnungen 28 und 30 an der Schürze 27 der Ventilspindel 25 bzw. an dem Dreheinsatz 29 in axialer Richtung aneinander vorbeigleiten können, ohne den Drehschluß zu verlieren. Dieser axiale Bewegungsfreiheitsgrad der Ventilspindel 25 wird, wie weiter unten deutlich wird, zur Verdrehung der Stopscheibe 5 benötigt.

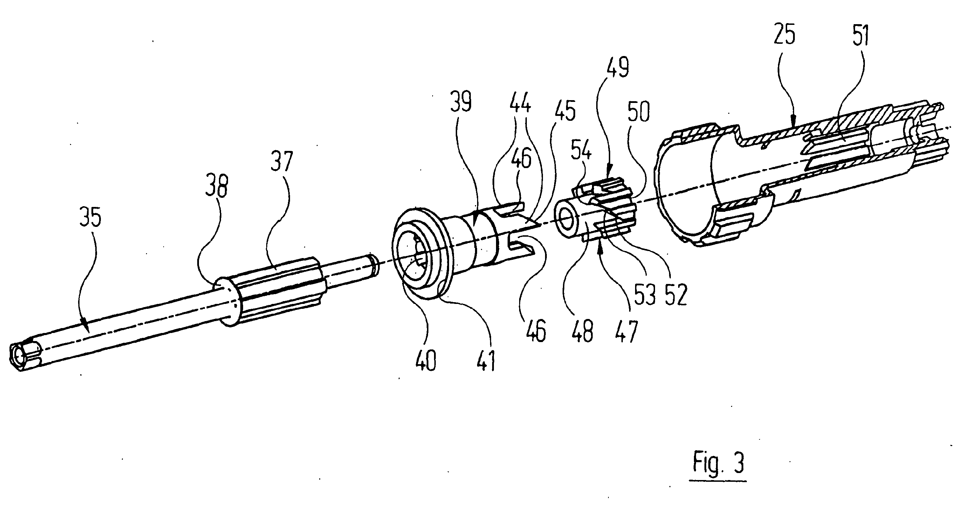

In der mittleren Durchtrittsöffnung 20 der Stopscheibe 5 ist das in den Figuren 1 und 2 linke, komplementär gestaltete und daher formschlüssig eingreifende Ende einer Steckwelle 35 eingeschoben und dort mit Hilfe einer Inbusschraube 36 befestigt. Die Steckwelle 35 verläuft koaxial durch die Hohlwelle 33 sowie durch den im Durchmesser kleineren Bereich der Stufenbohrung 31 des Dreheinsatzes 29 hindurch und trägt, wie Figur 3 zeigt, in der dort rechten Hälfte eine Keilverzahnung 37, die über eine radial verlaufende Schulter 38 auf einen etwas größeren Durchmesser gebracht ist.

Auf die Keilverzahnung 37 der Steckwelle 35 ist eine komplementäre Keilverzahnung 40 eines Kulissenteils 39 aufgeschoben. Das Kulissenteil 39 ist Teil eines Kulissenmechanismus, mit dem die Axialbewegung der Ventilspindel 25 in eine Drehbewegung der Steckwelle 35 und damit der Stopscheibe 5 umgesetzt werden kann.

Das Kulissenteil 39 kann gegenüber der Steckwelle 35 axial verschoben werden, wobei die Drehverbindung zwischen dem Kulissenteil 39 und der Steckwelle 35 aufgrund der ineinander greifenden Keilverzahnungen 37, 39 erhalten bleibt.

Auf den Außenumfang des in der Außenkontur ansonsten im wesentlichen zylindrischen Kulissenteils 39 ist ein radial überstehender Ringbund 41 angeformt. In montiertem Zustand erstreckt sich, wie Figur 1 zeigt, zwischen dem Ringbund 41 des Kulissenteils 39 und dem "Boden" des Dreheinsatzes 29 eine erste Druckfeder 42; eine zweite, im Durchmesser kleinere Druckfeder 43 stützt sich einerseits am Boden des Dreheinsatzes 29 und andererseits an der Ringschulter 38 der Steckwelle 35 ab.

Das in den Figuren 1 und 3 rechte Ende des Kulissenteils 40 ist mit fünf achsparallel verlaufenden Zungen 44 ausgestaltet, die jeweils in einer schräg zur Ventilachse verlaufenden Stirnfläche 45 enden. Zwischen den Zungen 44 befinden sich jeweils Zwischenräume 46.

Am innen liegenden, also in den Figuren 1 bis 3 rechten Ende der Steckwelle 35 ist ein Kulissengegenstück 47 mit Hilfe eines nicht dargestellten Sprengrings so befestigt, daß es axial fixiert ist, die Steckwelle 35 aber gegenüber dem Kulissengegenstück 47 verdrehbar ist. Das Kulissengegenstück 47 ist das zweite Teil des oben erwähnten Kulissenmechanismus. Es weist einen zylindrischen Bereich 48 auf, der in einer entsprechenden Bohrung des Kulissenteils 39 geführt ist, sowie eine Kulissenstruktur 49, die den selben Durchmesser aufweist wie die Zungen 44 des Kulissenteils 39 und die mit den Zungen 44 zusammenwirkt.

Die Kulissenstruktur 49 besitzt zunächst auf ihrer Außenmantelfläche zehn achsparallele Nuten 50, also doppelt so viele Nuten 50 wie das Kulissenteil 39 Zungen 44 aufweist. Diese Nuten 50 wirken in montiertem Zustand mit einer entsprechenden Anzahl von Rippen 51 an der Innenmantelfläche der Ventilspindel 25 zusammen und verhindern eine Relativverdrehung zwischen Kulissengegenstück 47 und Ventilspindel 25, lassen jedoch eine axiale Relativbewegung dieser Teile zu. Die in Richtung des Kulissenteils 39 weisenden Stirnflächen der Rippen 51 sind unter demselben Winkel wie die Zungen 44 des Kulissenteils 39 abgeschrägt.

Ferner sind in die Kulissenstruktur 49, von der linken, dem Kulissenteil 39 zugewandten Seite her fünf Einzelstrukturen 52 eingebracht, die einem Dreieck ähneln, dessen eine Seite achsparallel verläuft. Die andere Dreieckseite dagegen ist in der Mitte etwas abgestuft, so daß hier ein kleiner, vorstehender "Zacken" 53 entsteht. Insgesamt weist also die Kulissenstruktur 49 des Kulissengegenteils 47 zehn Zacken auf, von denen fünf Zacken 53 in den Figuren 1 und 3 weiter rechts und fünf Zacken 54 weiter links liegen. Die Neigung der nicht parallel zur Ventilachse verlaufenden seitlichen Begrenzungsflächen der Kulissenstruktur 49 entspricht der Neigung der abgeschrägten Stirnflächen 45 der Zungen 44 des Kulissenteils 39.

Die beschriebene Umstellvorrichtung ist in das oben erwähnte Außengehäuse derart eingebaut, daß die in den Figuren 1 und 2 linke Stirnseite der Stopscheibe 5 mit dem Wasserzufluß kommuniziert und deren Wasserdurchtrittsöffnungen 14 bis 18 den Einlaß in das Gehäuse 2 darstellen.

Die Funktion der Umstellvorrichtung ist folgende:

Zunächst sei angenommen, daß sich die Stopscheibe 5 gegenüber der benachbarten Steuerscheibe 4 in einer solchen Drehposition befinden, daß zwei Stege 19 der Stopscheibe 5 über den Durchtrittsöffnungen 9, 10 der Steuerscheibe 4 liegen. Das Einströmen von Wasser in die Umstellvorrichtung ist daher unterbunden. Weiter sei angenommen, daß die Drehstellung der Steuerscheibe 4 gegenüber der Grundscheibe 3 so ist, daß die Vertiefung 11 der Steuerscheibe 4 mit der Durchtrittsöffnung 6 der Grundscheibe 3 und damit mit dem Auslaß 23 kommuniziert.

Um die Absperrventileinrichtung der Umstellvorrichtung zu öffnen, wird mit Hilfe des Bediengriffs, der auf der Ventilspindel 25 befestigt ist, ein axialer Druck auf die Ventilspindel 25 nach innen, in den Figuren 1 und 2 also nach links, ausgeübt. Die Ventilspindel 25 verschiebt sich innerhalb des Gehäuses 2 nach innen, bis sie mit den jede zweite der Rippen 51 an den Zungen 44 des Kulissenteils 39 anstößt; die zwischenliegenden Rippen 51 ragen in jeweils eine Ausnehmung 46 zwischen zwei Zungen 44 des Kulissenteils hinein. Bei dieser Bewegung wird eine Druckfeder 61 komprimiert, die zwischen der äußeren Stirnfläche des Kulissengegenstücks 47 und der Stirnfläche der Bohrung der Ventilspindel 25 verläuft.

Bei einer weiteren Einwärtsbewegung der Ventilspindel 25 wird nunmehr das Kulissenteil 39 unter Kompression der Druckfeder 42 in den Figuren 1 und 2 nach links bewegt. Die Zungen 44 des Kulissenteils 39, die zunächst bis in die tiefste Stelle der Einzelstrukturen 52 des Kulissengegenstücks 47 eingedrungen waren, gleiten nunmehr zunächst achsparallel zurück, bis die vordersten Spitzen ihre Stirnflächen 45 von dem äußeren Zacken 54 der Kulissenstruktur 49 freigekommen sind. Unter dem Einfluß der Druckfeder 42 und der nockenartig zusammenwirkenden Stirnflächen eines Teils der Rippen 51 und der Zungen 44 verdrehen sich das Kulissenteil 39 und die mit ihm drehverbundenen Bauelemente um ein bestimmtes erstes Winkelinkrement. Die Drehbewegung des Kulissenteils 39 wird dabei von den in die Ausnehmungen 46 des Kulisenteils 39 ragenden Rippen 51 der Ventilspindel 25 begrenzt. Nunmehr wird der Druck auf die Ventilspindel 25 aufgegeben; diese kehrt unter dem Einfluß der Druckfeder 61 wieder in ihre Ausgangsposition zurück. Das Kulissenteil 39 dabei wird durch die Druckfeder 42 erneut nach rechts gedrückt. Die Zungen 44 des Kulissenteils 39 dringen in diejenigen Einzelstrukturen 52 der Kulissenstruktur 49 auf dem Kulissengegenstück 47 ein, welche den ursprünglichen Einzelstrukturen 52 benachbart sind. Da die Zungen 44 mit ihren abgeschrägten Stirnflächen 45 an entsprechend abgeschrägten Flächen der Einzelstrukturen 52 anliegen, entsteht durch Nockenwirkung ein Drehmoment zwischen Kulissenteil 39 und Kulissengegenstück 47. Da das Kulissengegenstück 47 durch den formschlüssigen Eingriff zwischen seinen Nuten 50 und den Rippen 51 der Ventilspindel 25 unverdrehbar gehalten wird, führt die geschilderte Wechselwirkung zu einer Verdrehung des Kulissenteils 39 um ein zweites Winkelinkrement, die sich über die wechselwirkenden Keilverzahnungen 40 des Kulissenteils 39 und 37 der Steckwelle 35 sowie die formschlüssige Verbindung zwischen dem linken Ende der Steckwelle 35 und der Stopscheibe 5 auf die Stopscheibe 5 überträgt. Bei dieser Drehbewegung verschiebt sich das Kulissenteil 39 wieder in den Figuren 1 und 2 nach rechts, wobei die schrägen Stirnflächen 45 der Zungen 44 an den entsprechenden schrägen seitlichen Begrenzungsflächen der Kulissenstruktur 49 auf dem Kulissengegenstück 47 entlanggleiten. Diese Bewegung findet so lange statt, bis die vordersten Spitzen der Zungen 44 jeweils an den inneren Zacken 53 der Kulissenstruktur 49 anstoßen. Dann bleibt das Kulissenteil 39 stehen.

Aufgrund der geometrischen Verhältnisse ist die dabei durchgeführte Drehbewegung der Stopscheibe 5 so groß, daß nunmehr zwei der Durchtrittsöffnungen 14, 15, 16, 17, 18 mit den beiden Durchtrittsöffnungen 9, 10 der Steuerscheibe 4 überlappen. Jetzt kann Wasser durch die beiden fraglichen Durchtrittsöffnungen der Stopscheibe 5 und die beiden Durchtrittsöffnungen 9, 10 der Steuerscheibe 4 hindurchströmen, sich in der Vertiefung 11 der Steuerscheibe 4 vereinigen und von dort durch die Durchtrittsöffnung 6 der Grundscheibe 3 bis zum Auslauf 23 strömen, der beispielsweise mit der Kopfbrause der Duschkabine verbunden ist. Wasser beginnt aus der Kopfbrause zu strömen.

Möchte der Benutzer den Wasserstrom von der Kopfbrause auf Seitenbrausen umstellen, so verdreht er die Ventilspindel 25 und damit aufgrund der oben beschriebenen mehrfachen Formschlüsse auch die Steuerscheibe 4, bis deren Vertiefung 11 nunmehr in Überlappung mit der anderen Durchtrittsöffnung 7 der Grundscheibe 3 gelangt. Die Stopscheibe 5 macht diese Drehbewegung mit, so daß also die Absperrventileinrichtung nach wie vor in ihrer Offenstellung ist.

Wünschst der Benutzer, den Wasserstrom durch den jeweils gewählten Brausekopf abzustellen, übt er erneut einen axialen Druck auf die Ventilspindel 26 aus. Dabei findet der selbe Schaltvorgang zwischen Ventilspindel 25, Kulissenteil 39 und Kulissengegenstück 47 statt, der oben schon einmal beschreiben wurde. Die hierbei erzeugte Drehbewegung von Kulissenteil 39 und Stopscheibe 5 erfolgt um den selben Winkel, der auch bei der Öffnungsbewegung durchlaufen wurde. Nunmehr überdecken wieder zwei Stege 19 der Stopscheibe 5 die beiden Durchtrittsöffnungen 9, 10 der Steuerscheibe 4. Der Wasserstrom ist unterbrochen, so daß der Benutzer sich beispielsweise einseifen kann.

Dadurch, daß die Stopscheibe 5 mehr Durchtrittsöffnungen aufweist als die Steuerscheibe 4, kommen die Durchtrittsöffnungen 14 bis 18 der Stopscheibe 5 nur zyklisch zum Einsatz. Dies bedeutet, daß die Winkel, um welche sich die Stopscheibe 5 bei jedem Schließ- und Öffnungsvorgang verdrehen muß, verhältnismäßig klein, im Beispielsfalle 36°, sind. Dies läßt sich mit dem beschriebenen Kulissenmechanismus ohne weiteres verwirklichen.

Die Relativposition zwischen Steuerscheibe 4 und Grundscheibe 3 bleibt bei den Bewegungen der Stopscheibe 5 unverändert. Durch einen axialen Druck auf die Ventilspindel 25 läßt sich daher der Wasserfluß zu dem jeweils eingeschalteten Brausekopf unterbrechen, der sich jedoch nach einem erneuten Druck auf die Ventilspindel 25 in der selben Weise wieder einstellt.

Die zwischen dem Boden des Dreheinsatzes 29 und der Schulter 38 der Steckwelle 35 eingespannte Druckfeder 43 dient dazu, einen Mindestanpreßdruck der Scheiben 3, 4 und 5 auch in denjenigen Zeiten aufrecht zu erhalten, in denen die Wirkung der Druckfeder 42 durch Eindrücken der Ventilspindel 25 aufgehoben ist.

## Patentansprüche

1. Umstellvorrichtung für eine Sanitäreinrichtung mit mindestens zwei Wasserverbrauchern, insbesondere für eine Duscheinrichtung mit mindestens zwei Duschköpfen, mit
a) einem Gehäuse (2), das einen Einlaß und mindestens zwei Auslässe (23, 24) aufweist;
b) einer Umstellventileinrichtung (3, 4), welche den Einlaß des Gehäuses (2) wahlweise mit einem der Auslässe (23, 24) des Gehäuses (2) verbindet und hierzu einen Ventilkörper (4) besitzt, der von einer in eine andere Stellung bewegbar ist, und
c) zusätzlich einer Absperrventileinrichtung (5), mit welcher der Wasserdurchfluß durch die Umstellventileinrichtung (3, 4) unterbrochen werden kann, ohne die Stellung des Ventilkörpers (4) der Umstellventileinrichtung (3, 4) zu verändern
**dadurch gekennzeichnet, daß**
d) die Umstellvorrichtung derart ausgestalltet ist, daβ die Stellung des Ventilkörpers (4) der Umstellventileinrichtung (3, 4) unabhängig von der Stellung der Absperrventileinrichtung (5) verändert werden kann.

2. Umstellvorrichtung nach Anspruch 1, **dadurch gekennzeichnet, daß**
a) der Ventilkörper (4) der Umstellventileinrichtung (3, 4) eine Steuerscheibe ist, die wenigstens eine Wasserdurchtrittsöffnung (9, 10, 11) aufweist und verdrehbar gegen eine feststehende Grundscheibe (3) anliegt, die mindestens zwei Wasserdurchtrittsöffnungen (6, 7) aufweist, die mit den Auslässen (23, 24) des Gehäuses (2) kommunizieren;
b) die Absperrventileinrichtung (4, 5) eine Stopscheibe (5) umfaßt, die an der Steuerscheibe (4) anliegt, sich mit dieser mitverdreht, aber zusätzlich eine Relativbewegung gegenüber der Steuerscheibe (4) ausführen kann und mindestens eine Wasserdurchtrittsöffnung (14 bis 18) aufweist, die in Überlappung mit der Durchtrittsöffnung (9, 10, 11) der Steuerscheibe (4) gebracht werden kann.

3. Umstellvorrichtung nach Anspruch 2, **dadurch gekennzeichnet, daß**
a) die Steuerscheibe (4) auf der der Stopscheibe (5) zugewandten Seite zwei Wasserdurchtrittsöffnungen (9, 10) aufweist, die in eine auf der gegenüberliegenden Seite eingebrachte Vertiefung (11) münden, wobei der die beiden Wasserdurchtrittsöffnungen (9, 10) in Umfangsrichtung trennende Steg (12) eine Winkelerstreckung hat, die etwas größer als die Winkelerstreckung der Wasserdurchtrittsöffnungen (9, 10) ist;
b) die Stopscheibe (5) mindestens zwei Wasserdurchtrittsöffnungen (14 bis 18) aufweist, deren Form und Winkelab stand der Form und dem Winkelabstand der Wasserdurchtrittsöffnungen (9, 10) der Steuerscheibe (4) entsprechen.

4. Umstellvorrichtung nach Anspruch 3, **dadurch gekennzeichnet, daß**
a) die Stopscheibe (5) eine Vielzahl von Wasserdurchtrittsöffnungen (14 bis 18) aufweist, die in regelmäßigen Winkelabständen angeordnet sind, wobei die Zahl der Wasserdurchtrittsöffnungen (14 bis 18) der Stopscheibe (5) größer als die Zahl der Wasserdurchtrittsöffnungen (9, 10) der Steuerscheibe (4) ist.
b) ein Betätigungsmechanismus (25, 35, 39, 47) vorgesehen ist, der bei jeder Betätigung die Stopscheibe (5) um den selben Winkel stets in der selben Richtung verdreht.

5. Umstellvorrichtung nach Anspruch 4, **dadurch gekennzeichnet, daß** der Betätigungsmechanismus (25, 35, 39, 47) ein unter axialem Druck bewegliches Teil (25) sowie einen Kulissenmechanismus (39, 47) umfaßt, wobei der Kulissenmechanismus (39, 47) die Bewegung des axial beweglichen Teils (25) in eine Verdrehung der Stopscheibe (5) umsetzt.

6. Umstellvorrichtung nach Anspruch 5, **dadurch gekennzeichnet, daß** das axial bewegliche Teil (25) eine Ventilspindel ist, die zusätzlich verdrehbar ist und mit der Steuerscheibe (4) in Drehverbindung steht.

7. Umstellvorrichtung nach Anspruch 6, **dadurch gekennzeichnet, daß** im Kraftfluß zwischen der Ventilspindel (25) und der Steuerscheibe (4) eine Hohlwelle (33) liegt, durch die sich eine Steckwelle (35) hindurch erstreckt, welche die Stopscheibe (5) mit dem Kulissenmechanismus (39, 47) verbindet.

## Claims

1. Switch-over device for a sanitary device with at least two water users, in particular for a shower device with at least two shower heads, with
a) a housing (2) which comprises an inlet and at least two outlets (23, 24);
b) a switch-over valve device (3, 4) which optionally connects the inlet of the housing (2) to one of the outlets (23, 24) of the housing (2) and also has a valve body (4) which may be moved from one position to another, and
c) additionally a shut-off valve device (5) with which the water flow through the switch-over valve device (3, 4) may be interrupted, without changing the position of the valve body (4) of the switch-over valve device (3, 4) ,
**characterised in that**
d) the switch-over device is configured such that the position of the valve body (4) of the switch-over valve device (3, 4) may be changed independently of the position of the shut-off valve device (5).

2. Switch-over device according to claim 1, **characterised in that**
a) the valve body (4) of the switch-over valve device (3, 4) is a regulator disc which comprises at least one water through-passage opening (9, 10, 11) and bears rotatably against a stationary base plate (3) which comprises at least two water through-passage openings (6, 7) which communicate with the outlets (23, 24) of the housing (2);
b) the shut-off valve device (4, 5) comprises a stop disc (5) which bears against, and rotates with, the regulator disc (4), but additionally may execute a relative movement relative to the regulator disc (4) and comprises at least one water through-passage opening (14 to 18) which may be brought to overlap the through-passage opening (9, 10, 11) of the regulator disc (4).

3. Switch-over device according to claim 2,
**characterised in that**
a) the regulator disc (4) on the side facing the stop disc (5) comprises two water through-passage openings (9, 10) which discharge into a recess (11) incorporated on the opposing side, the web (12) separating the two water through-passage openings (9, 10) in the circumferential direction having an angular extension which is slightly greater than the angular extension of the water through-passage openings (9, 10);
b) the stop disc (5) comprises at least two water through-passage openings (14 to 18) of which the shape and angular spacing correspond to the shape and angular spacing of the water through-passage openings (9, 10) of the regulator disc (4).

4. Switch-over device according to claim 3,
**characterised in that**
a) the stop disc (5) comprises a plurality of water through-passage openings (14 to 18) which are arranged at regular angular spacings, the number of water through-passage openings (14 to 18) of the stop disc (5) being greater than the number of water through-passage openings (9, 10) of the regulator disc (4).
b) an actuating mechanism (25, 35, 39, 47) is provided which, with each actuation of the stop disc (5), rotates by the same angle and always in the same direction.

5. Switch-over device according to claim 4, **characterised in that** the actuating mechanism (25, 35, 39, 47) comprises a part (25) movable under axial pressure and a ratchet mechanism (39, 47), the ratchet mechanism (39, 47) transferring the movement of the axially movable part (25) into a rotation of the stop disc (5).

6. Switch-over device according to claim 5, **characterised in that** the axially movable part (25) is a valve spindle which is also rotatable and is rotatably connected to the regulator disc (4).

7. Switch-over device according to claim 6, **characterised in that** a hollow shaft (33) is located in the power flow between the valve spindle (25) and the regulator disc (4), through which a push-on shaft (35) extends which connects the stop disc (5) to the ratchet mechanism (39, 47).

## Revendications

1. Dispositif inverseur pour un dispositif sanitaire comptant au moins deux consommateurs d'eau, notamment destiné à une installation de douche dotée d'au moins deux pommes de douche, qui comprend :
a) un boîtier (2) avec une entrée et au moins deux sorties (23, 24) ;
b) un inverseur à obturateur (3, 4) qui permet de relier l'entrée du boîtier (2), au choix, à l'une des sorties (23, 24) du boîtier (2) et qui possède à cet effet un obturateur (4) que l'on peut faire passer d'une position à l'autre, et
c) un dispositif d'arrêt (5) permettant d'interrompre la circulation de l'eau à travers l'inverseur à obturateur (3, 4) sans modifier le réglage de l'obturateur (4) de l'inverseur à obturateur (3, 4),
**caractérisé en ce que**
d) l'inverseur est conçu de telle sorte que la position de l'obturateur (4) de l'inverseur à obturateur (3, 4) peut être modifiée indépendamment de la position du dispositif d'arrêt (5).

2. Dispositif inverseur selon la revendication 1, **caractérisé en ce que**
a) l'obturateur (4) de l'inverseur à obturateur (3, 4) est un disque de commande qui présente au moins un orifice de passage pour l'eau (9, 10, 11) et est appliqué contre un disque de base fixe (3) de manière à pouvoir tourner, lequel disque comporte au moins deux orifices de passage pour l'eau (6, 7) communiquant avec les sorties (23, 24) du boîtier (2) ;
b) le dispositif d'arrêt (4, 5) comprend un disque d'arrêt (5) qui est appliqué contre le disque de commande (4), tourne en même temps que ce dernier, mais peut en plus effectuer un mouvement relatif par rapport au disque de commande (4) et présente au moins un orifice pour le passage de l'eau (14 à 18) pouvant être superposé à l'orifice pour le passage de l'eau (9, 10, 11) du disque de commande (4).

3. Dispositif inverseur selon la revendication 2, **caractérisé en ce que**
a) le disque de commande (4) présente sur la face tournée vers le disque d'arrêt (5) deux orifices de passage pour l'eau (9, 10) qui débouchent dans un évidement (11) ménagé sur la face opposée, l'aile (12) qui sépare les deux orifices de passage pour l'eau (9, 10) ayant une étendue angulaire qui est légèrement supérieure à celle des orifices de passage pour l'eau (9, 10) ;
b) le disque d'arrêt (5) présente au moins deux orifices de passage pour l'eau (14 à 18) dont la forme et l'écart angulaire correspondent à la forme et à l'écart angulaire des orifices de passage pour l'eau (9, 10) du disque de commande (4).

4. Dispositif inverseur selon la revendication 3, **caractérisé en ce que**
a) le disque d'arrêt (5) présente de nombreux orifices pour le passage de l'eau (14 à 18) qui sont disposés avec des écarts angulaires réguliers, le nombre d'orifices pour le passage de l'eau (14 à 18) du disque d'arrêt (5) étant supérieur au nombre d'orifices de passage pour l'eau (9, 10) du disque de commande (4),
b) un mécanisme d'actionnement (25, 35, 39, 47) étant prévu, qui, à chaque fois qu'il est actionné, fait tourner le disque d'arrêt (5) sur le même angle toujours dans le même sens.

5. Dispositif inverseur selon la revendication 4, **caractérisé en ce que** le mécanisme d'actionnement (25, 35, 39, 47) comprend une partie (25) mobile sous l'effet d'une pression axiale et un mécanisme à coulisse (39, 47), le mécanisme à coulisse (39, 47) transformant le mouvement de la partie (25) mobile axialement en une rotation du disque d'arrêt (5).

6. Dispositif inverseur selon la revendication 5, **caractérisé en ce que** la partie (25) mobile axialement est une tige d'obturateur qui peut en outre tourner et qui est en liaison rotative avec le disque de commande (4).

7. Dispositif inverseur selon la revendication 6, **caractérisé en ce que** sur le parcours de la force entre la tige d'obturateur (25) et le disque de commande (4) se trouve un arbre creux (33) que traverse un arbre emboîtable (35) reliant le disque d'arrêt (5) au mécanisme à coulisse (39, 47).
